# EUROPÄISCHE PATENTSCHRIFT

(11) **EP 3 622 668 B1**
(45) Veröffentlichungstag und Bekanntmachung des Hinweises auf die Patenterteilung: **25.08.2021**
(21) Anmeldenummer: 18723815.9
(22) Anmeldetag: 08.05.2018
(51) Int. Cl.: H04L 12/24

(54) **VERFAHREN ZUM BETREIBEN EINES NETZWERKES, BEI DEM EINE ANFRAGE PER BROADCAST MITTELS DES PROTOKOLLS SNMP AUSGESENDET WIRD**
METHOD FOR OPERATING A NETWORK IN WHICH A QUERY IS SENT BY BROADCAST BY MEANS OF THE SNMP PROTOCOL
PROCÉDÉ D'EXPLOITATION D'UN RÉSEAU, SELON LEQUEL UNE REQUÊTE DE DIFFUSION EST ÉMISE AU MOYEN DU PROTOCOLE SNMP

(30) Priorität: 12.05.2017 DE 102017110344
(43) Veröffentlichungstag der Anmeldung: 18.03.2020
(73) Patentinhaber: Hirschmann Automation and Control GmbH, 72654 Neckartenzlingen (DE)
(72) Erfinder: WALDEN, Andreas, 72124 Pliezhausen (DE); SEEHOFER, Markus, 73098 Rechberghausen (DE)
(74) Vertreter: Greif, Thomas
(86) Internationale Anmeldenummer: PCT/EP2018/061931
(87) Internationale Veröffentlichungsnummer: WO 2018/206609

(56) Entgegenhaltungen:
- US-A1- 2003 035 424
- US-A1- 2012 226 798
- Datenschutzbeauftragter: "MAC-Adressen - Aufbau, Funktion und Gefahren im Netzwerk", , 21. August 2015 (2015-08-21), XP055491074, Gefunden im Internet: URL:https://www.printfriendly.com/p/g/gTML nq [gefunden am 2018-07-09]
- J. SCHONWALDER: "Using multicast-SNMP to coordinate distributed management agents", PROCEEDINGS OF IEEE INTERNATIONAL WORKSHOP ON SYSTEM MANAGEMENT, 1 January 1996 (1996-01-01), pages 136-141, XP055745468, DOI: 10.1109/IWSM.1996.534156 ISBN: 978-0-8186-7442-6

## Beschreibung

Die Erfindung betrifft ein Verfahren zum Betreiben eines Netzwerkes, wobei in dem Netzwerk mindestens zwei Netzwerkgeräte über eine Datenleitung miteinander verbunden sind und Daten über diese Datenleitung austauschen, wobei jedem Netzwerkgerät eine eigenständige MAC-Adresse fest zugeordnet ist, wobei weiterhin eine Netzwerkmanagementstation die Konfiguration und/oder den Betrieb des Netzwerkes steuert, gemäß den Merkmalen des Oberbegriffes des Patentanspruches 1.

Netzwerke, bei denen in einer Ring- oder Linientopologie zwei oder im Regelfall mehr als zwei Netzwerkgeräte (auch als Netzwerkinfrastrukturgeräte bezeichnet) angeordnet sind und Daten miteinander austauschen, sind grundsätzlich bekannt. Der Datenaustausch erfolgt über Datenleitungen, über die die Netzwerkgeräte miteinander verbunden sind. Diese Datenleitungen können Kabel, aber auch drahtlose Verbindungen, wie beispielsweise Funkverbindungen, sein.

In der Praxis besteht das Problem, dass entweder ein neues Netzwerk, welches aus mehreren Netzwerkgeräten aufgebaut worden ist, konfiguriert oder in einem bestehenden Netzwerk die gesamte Konfiguration oder dessen Konfiguration teilweise (zum Beispiel bei Austausch eines Netzwerkgerätes) geändert bzw. aktualisiert werden muss. Dies erfolgt über eine Netzwerkmanagementstation, die in geeigneter Weise mit allen Netzwerkgeräten verbunden ist. Über die Datenleitungen kann die Netzwerkmanagementstation die jeweilige MAC-Adresse der Netzwerkgeräte abfragen bzw. bekommt diese von den Netzwerkgeräten zugesandt. Damit ist der Netzwerkmanagementstation zunächst grundsätzlich bekannt, dass zwar Netzwerkgeräte in dem Netzwerk vorhanden sind, allerdings ist deren Konfiguration entweder noch gar nicht erfolgt oder nicht vollständig oder sogar fehlerhaft.

In diesem Zusammenhang wird auch auf die Druckschrift US 2012 226798 A1 verwiesen, welche ein Verfahren zur schnellen Netzwerk-Erfassung unter Zuhilfenahme von SNMP Multicast offenbart.

Der Erfindung liegt daher die Aufgabe zugrunde, ein Verfahren zum Betreiben eines Netzwerkes hinsichtlich der Inbetriebnahme des Netzwerkes und/oder des Betriebes zu verbessern. Insbesondere sollen alle sich in einem Netzwerk befindenden Netzwerkgeräte erkennt werden. Diesbezüglich sollen vor allen Dingen noch gar nicht konfigurierte Netzwerkgeräte (also neue Netzwerkgeräte vor ihrer Inbetriebnahme oder nach einem Austausch eines defekten Netzwerkgerätes) oder möglicherweise nicht korrekt konfigurierte Netzwerkgeräte erkannt und angesprochen werden.

Diese Aufgabe ist durch die Merkmale des Patentanspruches 1 gelöst.

Erfindungsgemäß ist vorgesehen, dass von der Netzwerkmanagementstation eine Anfrage per Multicast mittels des Protokolls SNMP an die Netzwerkgeräte (an vorbestimmte Netzwerkgeräte oder an eine oder mehrere Gruppen von Netzwerkgeräten) geschickt wird, um die Konfigurationsparameter der Netzwerkgeräte abzufragen und/oder die angefragten Netzwerkgeräte per SNMP zu konfigurieren.

Das jeweilige angefragte Netzwerkgerät wird somit mittels des Protokolls SNMP in die übermittelte Konfiguration gebracht. Außerdem kann ein jeweiliges abgefragtes Netzwerkgerät seine Konfigurationsparameter per Unicast mittels des Protokolls SNMP an die Netzwerkmanagementstation zurücksenden.

Das Verfahren nutzt die Erkenntnis aus, dass das Protokoll SNMP (Simple Network Management Protocol, einfaches Netzwerkverwaltungsprotokoll) Netzwerkgeräte (wie zum Beispiel Computer, Drucker, Router, Server, Switches und dergleichen) von einer zentralen Netzwerkmanagementstation aus überwachen und steuern kann. Dieses Protokoll regelt dabei die Kommunikation zwischen den überwachten Netzwerkgeräten und der Netzwerkmanagementstation. Dieses Protokoll ist inzwischen etabliert und kann für den Austausch von Daten, insbesondere Konfigurationsdaten, zwischen der Netzwerkmanagementstation und dem jeweiligen Netzwerkgerät benutzt werden. Hierbei werden die Befehle "get" zum Anfordern eines Management-Datensatzes und "set" verwendet, um einen oder mehrere Datensätze eines Netzwerkgerätes zu verändern. Fragt die Netzwerkmanagementstation ein Netzwerkgerät ab, erfolgt dies durch den Befehl "request", wobei die Antwort des Netzwerkgerätes auf die erfolgte Abfrage mit dem Befehl "response" erfolgt. Darauf basierend nutzt die Erfindung weiterhin die Erkenntnis, dass nicht nur das Anfordern von Management-Datensätzen mittels des Befehles "get request" als Multicast erfolgt, sondern dass auch die Rückantwort des abgefragten Gerätes über den Befehl "get response" als Unicast erfolgt. Bei dem Multicast in dem Netzwerk handelt es sich um eine Nachricht, bei der Datenpakete von einem Punkt aus (der Netzwerkmanagementstation) nicht an alle, sondern nur an vorbestimmte Netzwerkgeräte übertragen werden. Die Erfindung nutzt hier in vorteilhafter Weise die Erkenntnis aus, dass das Multicast-Paket nicht alle Netzwerkgeräte des Netzwerkes erreicht, so dass nur bestimmte Netzwerkgeräte angesprochen werden, insbesondere diejenigen, die neu konfiguriert oder umkonfiguriert werden sollen.

In Weiterbildung der Erfindung ist vorgesehen, dass sowohl die Anfrage der Netzwerkmanagementstation als auch die Rücksendung des angefragten Netzwerkgerätes auf Layer-3-Ebene durchgeführt wird. Dies hat den Vorteil, dass auch ein noch nicht konfiguriertes Netzwerkgerät auf Basis seiner bekannten MAC-Adresse angefragt werden kann, da es ihm noch keine IP-Adresse zugewiesen worden ist.

In Weiterbildung der Erfindung erfolgt die Rücksendung der tatsächlichen Konfigurationsparameter des angefragten Netzwerkgerätes trotzdem, auch wenn die von der Netzwerkmanagementstation an das Netzwerkgerät abgesandten Konfigurationsparameter nicht mit den tatsächlichen Konfigurationsparametern des angefragten Netzwerkgerätes übereinstimmen. Dies erfolgt unter Berücksichtigung der MAC-Adresse des angefragten Netzwerkgerätes, sodass von der NetzwerkmanagementStation mehrere, vorzugsweise alle Netzwerkgeräte des Netzwerkes abgefragt werden und die abgefragten Netzwerkgeräte trotzdem antworten, um auf diese Art und Weise ihre Konfigurationsdaten der Netzwerkmanagementstation zu übermitteln. Die Netzwerkmanagementstation fragt somit ein jeweiliges Netzwerkgerät mittels des Protokolls SNMP per Multicast an, woraufhin das angefragte Netzwerkgerät per Unicast antwortet und seine Konfigurationsparameter ebenfalls mittels des Protokolls SNMP an die Netzwerkmanagementstation zurück überträgt.

In Weiterbildung der Erfindung ist vorgesehen, dass dann, wenn die tatsächlichen Konfigurationsparameter des Netzwerkgerätes nicht mit den Soll-Konfigurationsparametern, die für den bestimmungsgemäßen Betrieb dieses Netzwerkgerätes erforderlich sind, übereinstimmen, mittels einer weiteren Anfrage der Netzwerkmanagementstation an dieses Netzwerkgerät die Soll-Konfigurationsparameter übermittelt werden, die dann von dem angefragten Netzwerkgerät übernommen werden. Dadurch kann ein Netzwerkgerät, wenn es gar keine oder fehlerhafte Konfigurationsparameter in seinem Speicher abgelegt hat, neu und korrekt konfiguriert werden, insbesondere bei der Erstinbetriebnahme. Gleiches gilt für den Austausch eines defekten Netzwerkgerätes, das auf diese Art und Weise schnell und problemlos konfiguriert werden kann. Damit wird es der Netzwerkmanagementstation ermöglicht, die Soll-Konfigurationsparameter, die für den bestimmungsgemäßen Betrieb dieses Netzwerkgerätes erforderlich sind, diesem Netzwerkgerät übermitteln, damit es diese abspeichern und damit seinen Betrieb aufnehmen kann.

In Weiterbildung der Erfindung wird die korrekte Übernahme der Soll-Konfigurationsparameter des angefragten Netzwerkgerätes von diesem an die Netzwerkmanagementstation zurückgesendet. Dadurch bekommt die Netzwerkmanagementstation die Information, dass die geänderte oder neue Konfiguration des angefragten Netzwerkgerätes erfolgreich durchgeführt wurde.

In Weiterbildung der Erfindung wird das Verfahren für nicht konfigurierte und/oder fehlerhaft konfigurierte Netzwerkgeräte durchgeführt. Damit bietet die Erfindung ein unkompliziert und schnell durchführbares Verfahren, um ein Netzwerk erstmalig in Betrieb zu nehmen bzw. um bei einem schon in Betrieb befindlichen Netzwerk Netzwerkgeräte austauschen und konfigurieren zu können.

In Weiterbildung der Erfindung erfolgt die Rücksendung der Konfigurationsparameter des angefragten Netzwerkgerätes unabhängig von der zu diesem Zeitpunkt eingestellten IP-Adresse dieses Netzwerkgerätes. Damit kann über das erfindungsgemäße Verfahren von der Netzwerkmanagementstation dem jeweiligen angefragten Netzwerkgerät dauerhaft oder zeitweise eine IP-Adresse zugeordnet werden, die dann durch Rücksendung als Unicast über das SNMP an die Netzwerkmanagementstation als eingestellt bzw. bestätigt rückgemeldet wird.

In Weiterbildung der Erfindung ist vorgesehen, dass das Netzwerkgerät mittels eines Universally Unique Identifier (UUID) innerhalb des SNMP-Paketes angesprochen wird. Wenn diese (das heißt der übertragene UUID und der in dem Netzwerkgerät abgelegte UUID) nicht übereinstimmt, werden die Konfigurationsparameter verworfen, das heißt nicht übernommen.

Das erfindungsgemäße Verfahren wird anhand von zwei Figuren dargestellt.

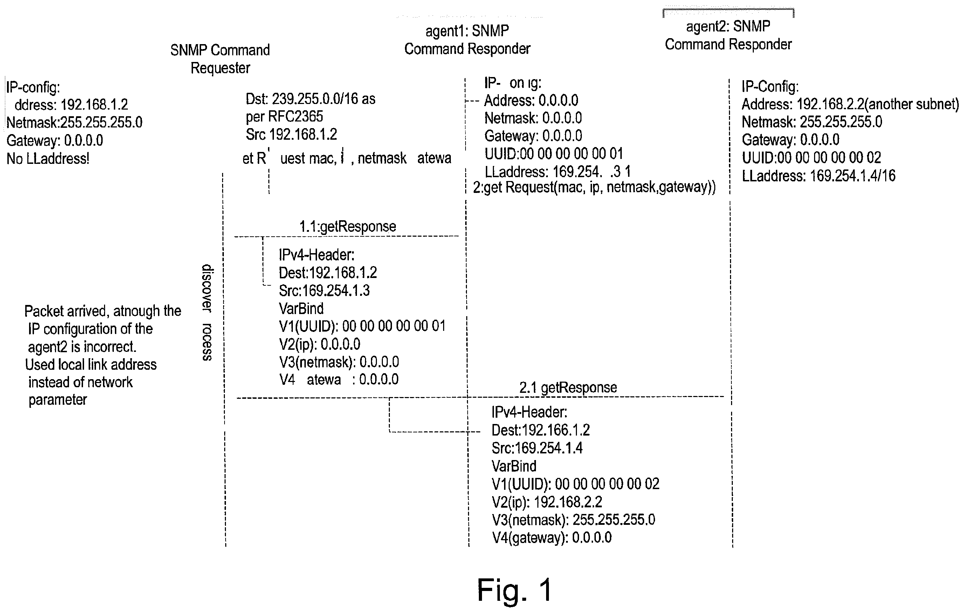

In Figur 1 ist erkennbar, die das erfindungsgemäße Verfahren bei der (Inbetriebnahme (Erstkonfiguration) eines Netzwerkgerätes durchgeführt wird. Das Verfahren wird von der Netzwerkmanagementstation (SNMP Command Requester) eingeleitet und in Zusammenarbeit mit einem Netzwerkgerät (agent1: SNMP Command Responder) auf die vorstehend beschriebene Art und Weise durchgeführt. Das Verfahren kann nicht nur für ein einziges Netzwerkgerät, sondern auch für mehrere Netzwerkgeräte durchgeführt werden. Um dies darzustellen ist in Figur 1 zumindest ein weiteres Netzwerkgerät (agent2: SNMP Command Responder) gezeigt.

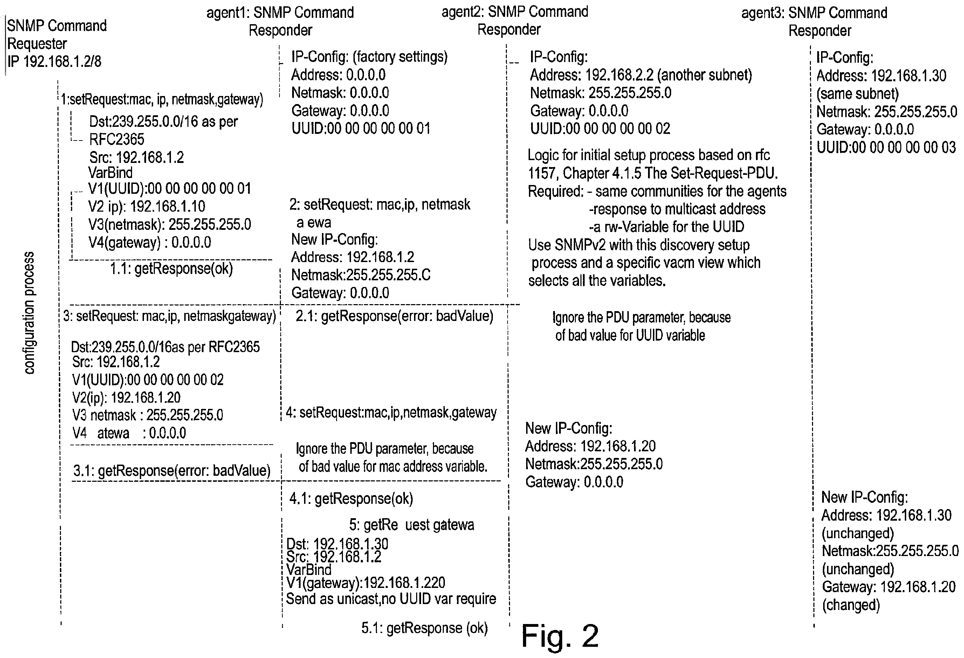

In Figur 2 ist dargestellt, dass das erfindungsgemäße Verfahren bei einem Austausch eines Netzwerkgerätes, bei einer Änderung einer schon bestehenden Konfiguration oder dergleichen durchgeführt wird. Auch hier wird das Verfahren wird von der Netzwerkmanagementstation (SNMP Command Requester) eingeleitet und in Zusammenarbeit mit einem Netzwerkgerät (agent1: SNMP Command Responder) auf die vorstehend beschriebene Art und Weise durchgeführt. Es ist, genauso wie das Verfahren bei der Erstkonfiguration, nicht auf ein einziges Netzwerkgerät beschränkt, sondern kann auf mehreren Netzwerkgeräten, insbesondere allen Netzwerkgeräten eines Netzwerkes durchgeführt werden. Beispielhaft sind in Figur 2 insgesamt drei Netzwerkgeräte (agent1, agent2, agent3) dargestellt.

## Patentansprüche

1. Verfahren zum Betreiben eines Netzwerkes, wobei in dem Netzwerk mindestens zwei Netzwerkgeräte über eine Datenleitung miteinander verbunden sind und Daten über diese Datenleitung austauschen, wobei jedem Netzwerkgerät eine eigenständige MAC-Adresse fest zugeordnet ist, wobei weiterhin eine Netzwerkmanagementstation die Konfiguration und/oder den Betrieb des Netzwerkes steuert, **dadurch gekennzeichnet, dass** von der Netzwerkmanagementstation eine Anfrage per Multicast mittels des Protokolls SNMP an die Netzwerkgeräte geschickt wird, um die Konfigurationsparameter der Netzwerkgeräte abzufragen und/oder die angefragten Netzwerkgeräte per SNMP zu konfigurieren, wobei das Netzwerkgerät mittels eines die Universally Unique Identifier, UUID, innerhalb des SNMP-Paketes angesprochen wird.

2. Verfahren nach Anspruch 1, **dadurch gekennzeichnet, dass** das jeweilige abgefragte Netzwerkgerät seine Konfigurationsparameter per Unicast mittels des Protokolls SNMP an die Netzwerkmanagementstation zurücksendet.

3. Verfahren nach Anspruch 1, **dadurch gekennzeichnet, dass** sowohl die Anfrage der Netzwerkmanagementstation als auch die Rücksendung des angefragten Netzwerkgerätes auf Layer-3-Ebene durchgeführt wird.

4. Verfahren nach Anspruch 1 oder 2, **dadurch gekennzeichnet, dass** die Rücksendung der tatsächlichen Konfigurationsparameter des angefragten Netzwerkgerätes trotzdem erfolgt, auch wenn die von der Netzwerkmanagementstation an das Hirschmann Automation and Control GmbH, Neckartenzlingen
Netzwerkgerät abgesandten Konfigurationsparameter nicht mit den tatsächlichen Konfigurationsparametern des angefragten Netzwerkgerätes übereinstimmen

5. Verfahren nach Anspruch 3, **dadurch gekennzeichnet, dass** dann, wenn die tatsächlichen Konfigurationsparameter des Netzwerkgerätes nicht mit den Soll-Konfigurationsparametern, die für den bestimmungsgemäßen Betrieb dieses Netzwerkgerätes erforderlich sind, übereinstimmen, mittels einer weiteren Anfrage der Netzwerkmanagementstation an dieses Netzwerkgerät die Soll-Konfigurationsparameter übermittelt werden, die dann von dem angefragten Netzwerkgerät übernommen werden.

6. Verfahren nach Anspruch 4, **dadurch gekennzeichnet, dass** die korrekte Übernahme der Soll-Konfigurationsparameter des angefragten Netzwerkgerätes von diesem an die Netzwerkmanagementstation zurückgesendet wird.

7. Verfahren nach einem der vorhergehenden Ansprüche, **dadurch gekennzeichnet, dass** das Verfahren für nicht konfigurierte und/oder fehlerhaft konfigurierte Netzwerkgeräte durchgeführt wird.

8. Verfahren nach einem der vorhergehenden Ansprüche, **dadurch gekennzeichnet, dass** die Rücksendung der Konfigurationsparameter des angefragten Netzwerkgerätes unabhängig von der zu diesem Zeitpunkt eingestellten IP-Adresse dieses Netzwerkgerätes erfolgt.

## Claims

1. Method for operating a network, wherein at least two network devices in the network are connected to one another via a data line and interchange data via this data line, wherein an independent MAC address is permanently assigned to each network device, wherein a network management station also controls the configuration and/or operation of the network, **characterized in that** the network management station sends a request to the network devices by multicast by means of the SNMP protocol in order to query the configuration parameters of the network devices and/or to configure the requested network devices by SNMP, wherein the network device is addressed by means of a Universally Unique Identifier, UUID, inside the SNMP packet.

2. Method according to Claim 1, **characterized in that** the respective queried network device returns its configuration parameters to the network management station by unicast by means of the SNMP protocol.

3. Method according to Claim 1, **characterized in that** both the request from the network management station and the return from the requested network device are carried out on layer 3.

4. Method according to Claim 1 or 2, **characterized in that** the actual configuration parameters of the requested network device are nevertheless returned even if the configuration parameters sent by the network management station to the network device do not correspond to the actual configuration parameters of the requested network device.

5. Method according to Claim 3, **characterized in that,** when the actual configuration parameters of the network device do not correspond to the desired configuration parameters required for the intended operation of this network device, the desired configuration parameters are transmitted to this network device by means of a further request from the network management station, which desired configuration parameters are then accepted by the requested network device.

6. Method according to Claim 4, **characterized in that** the correct acceptance of the desired configuration parameters by the requested network device is returned to the network management station by said network device.

7. Method according to one of the preceding claims, **characterized in that** the method is carried out for network devices which have not been configured and/or network devices which have been incorrectly configured.

8. Method according to one of the preceding claims, **characterized in that** the configuration parameters of the requested network device are returned irrespective of the IP address of this network device set at this time.

## Revendications

1. Procédé pour faire fonctionner un réseau, au moins deux périphériques de réseau étant reliés l'un à l'autre dans le réseau par le biais d'une ligne de données et échangeant des données par le biais de cette ligne de données, une adresse MAC indépendante étant attribuée de manière fixe à chaque périphérique de réseau, une station de gestion de réseau commandant en outre la configuration et/ou le fonctionnement du réseau, **caractérisé en ce qu'**une demande est envoyée par multidiffusion aux périphériques de réseau par la station de gestion de réseau au moyen du protocole SNMP afin d'interroger les paramètres de configuration des périphériques de réseau et/ou de configurer les périphériques de réseau interrogés par SNMP, le périphérique de réseau étant abordé au moyen d'un identificateur unique universel, UUID, à l'intérieur du paquet SNMP.

2. Procédé selon la revendication 1, **caractérisé en ce que** le périphérique de réseau respectivement interrogé renvoie ses paramètres de configuration à la station de gestion de réseau par unidiffusion au moyen du protocole SNMP.

3. Procédé selon la revendication 1, **caractérisé en ce que** l'interrogation par la station de gestion de réseau ainsi que le renvoi par le périphérique de réseau interrogé s'effectuent tous deux sur le plan de couche 3.

4. Procédé selon la revendication 1 ou 2, **caractérisé en ce que** le renvoi des paramètres de configuration effectifs du périphérique de réseau interrogé est effectué même lorsque les paramètres de configuration envoyés par la station de gestion de réseau au périphérique de réseau ne coïncident pas avec les paramètres de configuration effectifs du périphérique de réseau interrogé.

5. Procédé selon la revendication 3, **caractérisé en ce que** les paramètres de configuration effectifs du périphérique de réseau ne coïncident pas avec les paramètres de configuration de consigne qui sont nécessaires pour le fonctionnement de ce périphérique de réseau conformément à sa destination, les paramètres de configuration de consigne sont communiqués à ce périphérique de réseau au moyen d'une demande supplémentaire par la station de gestion de réseau, lesquels sont ensuite pris en charge par le périphérique de réseau interrogé.

6. Procédé selon la revendication 4, **caractérisé en ce que** la prise en charge correcte des paramètres de configuration de consigne par le périphérique de réseau interrogé est renvoyée par celui-ci à la station de gestion de réseau.

7. Procédé selon l'une des revendications précédentes, **caractérisé en ce que** le procédé est mis en œuvre pour les périphériques de réseau non configurés et/ou incorrectement configurés.

8. Procédé selon l'une des revendications précédentes, **caractérisé en ce que** le renvoi des paramètres de configuration par le périphérique de réseau interrogé est effectué indépendamment de l'adresse IP de ce périphérique de réseau réglée à cet instant.
